# EUROPEAN PATENT APPLICATION

(11) **EP 2 736 099 A1**
(43) Date of publication of application: **28.05.2014**
(21) Application number: 13170193.0
(22) Date of filing: 03.06.2013
(51) Int. Cl.: H01M 2/26, H01M 2/34, H01M 10/04, H01M 10/44, H01M 2/02

(54) **Rechargeable battery**

(30) Priority: 22.11.2012 KR 20120133066
(71) Applicant: Samsung SDI Co., Ltd., Yongin-si, Gyeonggi-do (KR)
(72) Inventor: Moon, Jong-Seok, Gyeonggi-do (KR); Lee, In-Hyun, Gyeonggi-do (KR); Nam, Hee-Sang, Gyeonggi-do (KR)
(74) Representative: Gulde & Partner

(57) **Abstract**

A rechargeable battery for preventing a safety device from being melted when a conductor penetrates is provided. The rechargeable battery (100) includes an electrode assembly (10) having a first electrode (11) and a second electrode (12) at both sides of a separator (13), a case (15) housing the electrode assembly (10), a cap plate (20) coupled to an opening of the case (15), a first electrode terminal (21) and second electrode terminal (22) that are installed in a terminal hole of the cap plate (20) to be connected to the first electrode (11) and the second electrode (12), respectively, and a safety device (71) that is disposed between the electrode assembly (10) and the case (15). The cap plate (20) is electrically connected to one of the first electrode (11) and the second electrode (12), and the safety device (71) is electrically connected to the another of the first electrode (11) and the second electrode (12. The safety device (71) includes a plate portion (711) and a protruded portion (712) that protrudes from at least one surface of the plate portion (711).

## Description

### BACKGROUND

### 1. Field

The present disclosure relates to a rechargeable battery having a safety device for penetration characteristics of a conductor.

### 2. Description of the Related Art

A rechargeable battery can repeatedly perform charge and discharge, unlike a primary battery. A rechargeable battery having a small capacity is generally used for a small portable electronic device like a mobile phone, a laptop computer, or a camcorder, while a rechargeable battery having a large capacity is generally used as a power source, for example, for driving a motor of a hybrid vehicle.

The rechargeable battery includes an electrode assembly (having a positive electrode and a negative electrode at both surfaces of a separator), a case that houses the electrode assembly, a cap plate that closes and seals an opening of the case, and a safety device that is disposed between the case and the electrode assembly.

The cap plate and the case are electrically connected to a positive electrode of the electrode assembly. The safety device is electrically connected to a negative electrode of the electrode assembly. In this way, when a conductor penetrates the case of the rechargeable battery and pokes the electrode assembly, the conductor can short-circuit the case and the safety device at the outside of the electrode assembly.

When the conductor penetrates, a current that is charged at the electrode assembly may be discharged while flowing to the safety device through the electrode terminal, the cap plate, the case, and the conductor. When the safety device is formed in a uniform thickness, the safety device has lower penetration resistance to a current flowing in a thickness direction thereof.

Therefore, an overcurrent may flow to the safety device contacting the conductor, and thus a portion of the safety device which contacts the conductor, may be melted. When the safety device is melted, an external short circuit of the conductor and the safety device may be terminated and a current that is charged within the electrode assembly is no longer discharged to the safety device through the conductor.

In this state, if the conductor continues to penetrate, the electrode assembly is penetrated by the conductor. That is, the conductor may cause an internal short circuit of the negative electrode and the positive electrode within the electrode assembly and the rechargeable battery may explode.

In order to prevent melting of the safety device, a thickness of the safety device may be entirely increased. In doing so, the safety device may have high penetration resistance to a current flowing in a thickness direction, but self-resistance to a current flowing in a plane direction of the safety device may be lowered by too much.

Therefore, more current may flow in the safety device contacting the conductor, and thus a portion of the safety device contacting with the conductor may be melted.

The above information disclosed in this Background section is only for enhancement of understanding of the background of the described technology, and therefore it may contain information that does not form the prior art that is already known in this country to a person of ordinary skill in the art.

### SUMMARY

Aspects of embodiments of the present invention are directed toward a rechargeable battery that can prevent a safety device from being melted when a conductor penetrates. According to embodiments of the present invention, this can be achieved by increasing penetration resistance while minimizing (or reducing) a decrease of self-resistance of the safety device.

An exemplary embodiment provides a rechargeable battery, comprising an electrode assembly having a first electrode, a second electrode, and a separator between the first electrode and the second electrode; a case housing the electrode assembly; a cap plate coupled to an opening of the case and electrically connected to the first electrode or the second electrode; a first electrode terminal and second electrode terminal in a terminal hole of the cap plate, the first electrode terminal and second electrode terminal adapted to connect to the first electrode and the second electrode, respectively; and a safety device electrically connected to another one of the first electrode or second electrode, the safety device being between the electrode assembly and the case and comprising a plate portion; and a protruded portion, protruding from at least one surface of the plate portion.

The first electrode may be a negative electrode, and the second electrode may be a positive electrode.

The safety device may be disposed in at least one side of both sides of the electrode assembly.

The rechargeable battery may further include: a first insulation member between the electrode assembly and the safety device; and a second insulation member between the safety device and the case.

The plate portion of the safety device may be in close contact with the first insulation member, and the protruded portion of the safety device may be in close contact with the second insulation member.

The protruded portion may be provided to have plural portions which are separated from each other in a first direction on the safety device and extended in a second direction intersecting (crossing) the first direction.

The protruded portions may be formed in a quadrilateral-shaped (e.g. square-shaped or rectangular shaped) cross-section structure. The protruded portion may be formed in a streamline cross-section structure.

The protruded portion may be extended in the first direction on the safety device. The protruded portion may have a maximum thickness at the center of the first direction and have a minimum thickness at either end of the first direction.

The protruded portion may include a plurality of first protruded lines that are separated from each other in a first direction on the safety device and extended in a second direction intersecting the first direction; and a plurality of second protruded lines that are separated from each other in the second direction and extended to the first direction and that intersect (cross) the first protruded lines.

The plate portion of the safety device may be in close contact with the second insulation member, and the protruded portion of the safety device may be in close contact with the first insulation member.

The protruded portion of the safety device may include a first protruded portion on a first surface of the safety device, and a second protruded portion on a second surface of the safety device, facing oppositely away from the first surface.

The plate portion may be separated between the first insulation member and the second insulation member.

The first protruded portion may be in close contact with the first insulation member, and the second protruded portion may be in close contact with the second insulation member.

In this way, according to an exemplary embodiment, in a plate portion, by disposing a safety device having a protruded portion between an electrode assembly and a case, when a conductor penetrates, melting of the safety device can be prevented.

That is, because the protruded portion increases penetration resistance in a thickness direction to a current while minimizing (or reducing) a decrease of self-resistance of the safety device, when the conductor penetrates, melting of the safety device can be prevented. Therefore, when the conductor penetrates, explosion of a rechargeable battery by an internal short circuit of the electrode assembly can be prevented.

### BRIEF DESCRIPTION OF THE DRAWINGS

The accompanying drawings, together with the specification, illustrate exemplary embodiments of the present invention, and, together with the description, serve to explain the principles of the present invention.

FIG. 1 shows a perspective view illustrating a rechargeable battery according to a first exemplary embodiment of the present invention.

FIG. 2 shows a cross-sectional view illustrating the rechargeable battery taken along line II-II of FIG. 1.

FIG. 3 shows an exploded perspective view illustrating an electrode assembly, a first insulation member, a safety device, and a second insulation member of FIG. 2.

FIG. 4 shows a cross-sectional view illustrating the electrode assembly, the first insulation member, the safety device, and the second insulation member taken along line IV-IV of FIG. 2.

FIG. 5 shows a partial cross-sectional view illustrating a state in which a conductor is short-circuited in the safety device of FIG. 4.

FIG. 6 shows a cross-sectional view illustrating a rechargeable battery according to a second exemplary embodiment of the present invention.

FIG. 7 shows a partial cross-sectional view illustrating a state in which a conductor is short-circuited in the safety device of FIG. 6.

FIG. 8 shows a cross-sectional view illustrating a rechargeable battery according to a third exemplary embodiment of the present invention.

FIG. 9 shows a partial cross-sectional view illustrating a state in which a conductor is short-circuited in the safety device of FIG. 8.

FIG. 10 shows a cross-sectional view illustrating a rechargeable battery according to a fourth exemplary embodiment of the present invention.

FIG. 11 shows a partial cross-sectional view illustrating a state in which a conductor is short-circuited in the safety device of FIG. 10.

FIG. 12 shows a cross-sectional view illustrating a rechargeable battery according a fifth exemplary embodiment of the present invention.

FIG. 13 shows an exploded perspective view illustrating an electrode assembly, a first insulation member, a safety device, and a second insulation member of a rechargeable battery according to a sixth exemplary embodiment of the present invention.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, without departing from the scope of the present invention. The drawings and detailed description are to be regarded as illustrative in nature and not restrictive. In the context of the present application, when a first element is referred to as being "on" a second element, it can be directly on the second element or be indirectly on the second element, with one or more intervening elements interposed therebetween. Like reference numerals designate like elements throughout the specification.

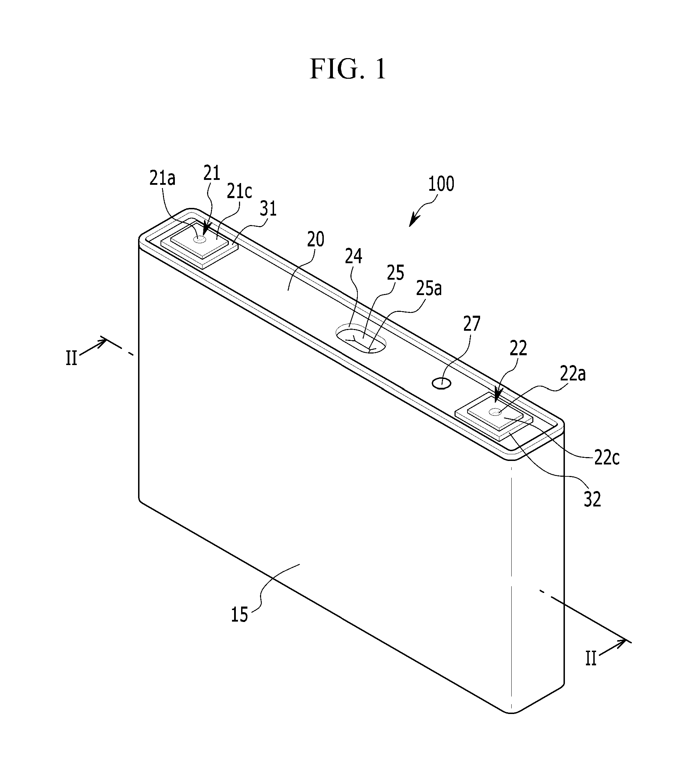

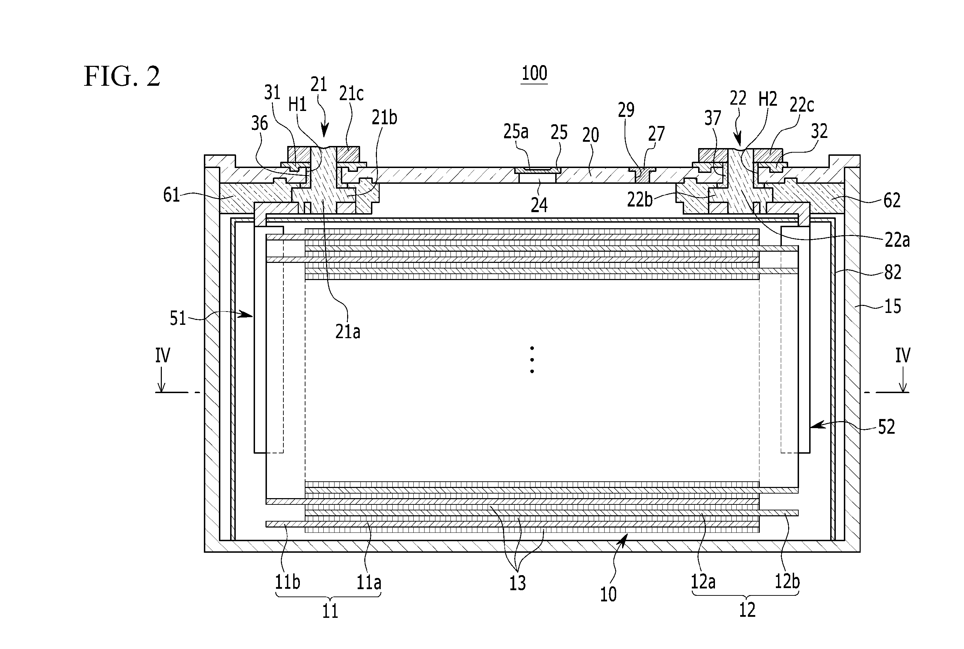

FIG. 1 shows a perspective view illustrating a rechargeable battery according to a first exemplary embodiment of the present invention, and FIG. 2 shows a cross-sectional view illustrating the rechargeable battery taken along line II-II of FIG. 1. Referring to FIGS. 1 and 2, a rechargeable battery 100 according to the first exemplary embodiment includes an electrode assembly 10 that charges and discharges a current, a case 15 that houses the electrode assembly 10, a cap plate 20 that is coupled to an opening of the case 15, and a first electrode terminal 21 (hereinafter, referred to as a "negative terminal") and a second electrode terminal 22 (hereinafter, referred to as a "positive terminal") that are installed in the cap plate 20.

For example, the electrode assembly 10 is formed by disposing a separator 13, which is an insulator, between a first electrode 11 (hereinafter, referred to as a "negative electrode") and a second electrode 12 (hereinafter, referred to as a "positive electrode") and spiral-winding the negative electrode 11, the separator 13, and the positive electrode 12 in a jelly roll form.

In one embodiment, the negative electrode 11 and the positive electrode 12 include coated regions 11 a and 12a, in which an active material is applied to a current collector of a metal plate, and uncoated regions 11 b and 12b, respectively, in which an active material is not applied to a current collector of the metal plate, which are thus formed as an exposed current collector.

In one embodiment, the uncoated region 11 b of the negative electrode 11 is formed at an end portion of one side of the negative electrode 11, along the spiral-wound negative electrode 11. The uncoated region 12b of the positive electrode 12 is formed at an end portion of one side of the positive electrode 12 along the spiral-wound positive electrode 12. Therefore, in one embodiment, the uncoated regions 11 b and 12b are each disposed at both ends of the electrode assembly 10.

By way of example, in order to provide a space that houses the electrode assembly 10 and an electrolyte solution at the inside, the case 15 is formed in an approximately cuboid shape, and has an opening that connects an outside space to an inside space at a surface of the cuboid, through which the electrode assembly 10 is inserted into the case 15.

In one embodiment, the cap plate 20 is installed in the opening of the case 15, to close and seal the case 15. By way of example, the case 15 and the cap plate 20 may be made of aluminum and may be welded together.

The cap plate 20 may further include an electrolyte injection opening 29, a vent hole 24, and terminal holes H1 and H2. The electrolyte injection opening 29 may couple the cap plate 20 to the case 15 and enables injection of an electrolyte into the case 15. After injection of the electrolyte, the electrolyte injection opening 29 may be sealed by a seal stopper 27.

In order to discharge an internal pressure of the rechargeable battery 100, the vent hole 24 may be closed and sealed by a vent plate 25. When an internal pressure of the rechargeable battery 100 reaches a set pressure, the vent plate 25 may be cut out and the vent hole 24 opened. The vent plate 25 may have a notch 25a that guides cutting out the vent plate 25.

In one embodiment, the negative terminal 21 and the positive terminal 22 are installed in terminal holes H1 and H2 of the cap plate 20 and are electrically connected to the electrode assembly 10. Specifically, in one embodiment the negative terminal 21 is electrically connected to the negative electrode 11 of the electrode assembly 10, and the positive terminal 22 is electrically connected to the positive electrode 12 of the electrode assembly 10. Therefore, the electrode assembly 10 can be drawn out to the outside of the case 15 through the negative terminal 21 and the positive terminal 22.

In one embodiment, the negative and positive terminals 21 and 22 include rivet terminals 21 a and 22a that are installed in each of the terminal holes H1 and H2 of the cap plate 20, flanges 21 b and 22b that are integrally widely formed in the rivet terminals 21 a and 22a within the cap plate 20, and plate terminals 21 c and 22c that are disposed at the outside of the cap plate 20 to be connected to the rivet terminals 21 a and 22a, respectively by riveting or welding.

In one embodiment, negative and positive gaskets 36 and 37 are installed between the rivet terminals 21 a and 22a of the negative and positive terminals 21 and 22 and an inner surface of the terminal holes H1 and H2 of the cap plate 20, to seal and electrically insulate the rivet terminals 21 a and 22a of the negative and positive terminals 21 and 22 and the cap plate 20, respectively.

In one embodiment, the negative and positive gaskets 36 and 37 are further extended between the flanges 21 b and 22b and an inner surface of the cap plate 20, to seal and electrically insulate the flanges 21 b and 22b and the cap plate 20, respectively. That is, the negative and positive gaskets 36 and 37 may be used to install the negative and positive terminals 21 and 22 in the cap plate 20, thereby preventing or reducing leakage of an electrolyte solution through the terminal holes H1 and H2.

In one embodiment, negative and positive lead tabs 51 and 52 electrically connect the negative and positive terminals 21 and 22 to the negative and positive electrodes 11 and 12 of the electrode assembly 10, respectively. By coupling the negative and positive lead tabs 51 and 52 to a lower end of the rivet terminals 21 a and 22a and by caulking the lower end, the negative and positive lead tabs 51 and 52 are connected to the lower end of the rivet terminals 21 a and 22a while being supported to the flanges 21 b and 22b, respectively.

In one embodiment, negative and positive insulation members 61 and 62 are installed between the negative and positive lead tabs 51 and 52 and the cap plate 20, respectively, to electrically insulate the negative and positive lead tabs 51 and 52 and the cap plate 20. Further, the negative and positive insulation members 61 and 62 are coupled to the cap plate 20 at one side and enclose the negative and positive lead tabs 51 and 52, the rivet terminals 21 a and 22a, and the flanges 21 b and 22b at another side, thereby stabilizing a connection structure thereof.

In one embodiment, the cap plate 20 is electrically connected to the negative terminal 21 or the positive terminal 22. In the first exemplary embodiment, the cap plate 20 is electrically connected to the positive terminal 22.

In one embodiment, an insulation member 31 at the negative terminal 21 is installed between the plate terminal 21 c and the cap plate 20, to electrically insulate the plate terminal 21 c and the cap plate 20. In this way, the cap plate 20 can maintain electrical insulation from the negative terminal 21.

For example, the insulation member 31 may be interposed between the plate terminal 21 c and the cap plate 20, and may penetrate the rivet terminal 21 a. Therefore, by coupling the insulation member 31 and the plate terminal 21 c to an upper end portion of the rivet terminal 21 a and caulking the upper end portion, the insulation member 31 and the plate terminal 21 c are coupled to the upper end portion of the rivet terminal 21 a.

In one embodiment, the negative gasket 36 is further extended between the rivet terminal 21 a and the insulation member 31. In this way, the negative gasket 36 further reinforces sealing and electric insulation between the rivet terminal 21 a and the insulation member 31.

In one embodiment, a top plate 32 of the positive terminal 22 is formed with a conductive member and is installed between the plate terminal 22c and the cap plate 20, to electrically connect the plate terminal 22c and the cap plate 20. In this way, the cap plate 20 can maintain an electrical connection to the electrode assembly 10 through the positive terminal 22.

For example, the top plate 32 is interposed between the plate terminal 22c and the cap plate 20 and penetrates the rivet terminal 22a. Therefore, by coupling the top plate 32 and the plate terminal 22c to an upper end portion of the rivet terminal 22a and caulking the upper end portion, the top plate 32 and the plate terminal 22c are coupled to the upper end portion of the rivet terminal 22a.

In one embodiment, the positive gasket 37 is further extended between the rivet terminal 22a and the top plate 32. In this way, the positive gasket 37 prevents the rivet terminal 22a and the top plate 32 from being directly electrically connected. That is, the rivet terminal 22a is electrically connected to the top plate 32 through the plate terminal 22c and indirectly electrically connected to the cap plate 20 through the top plate 32.

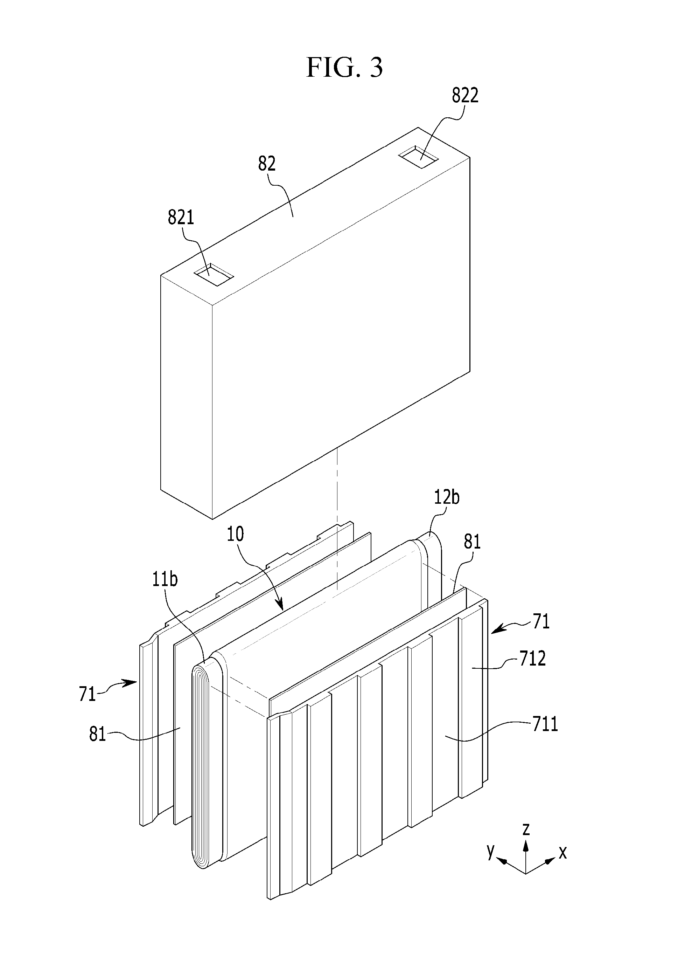

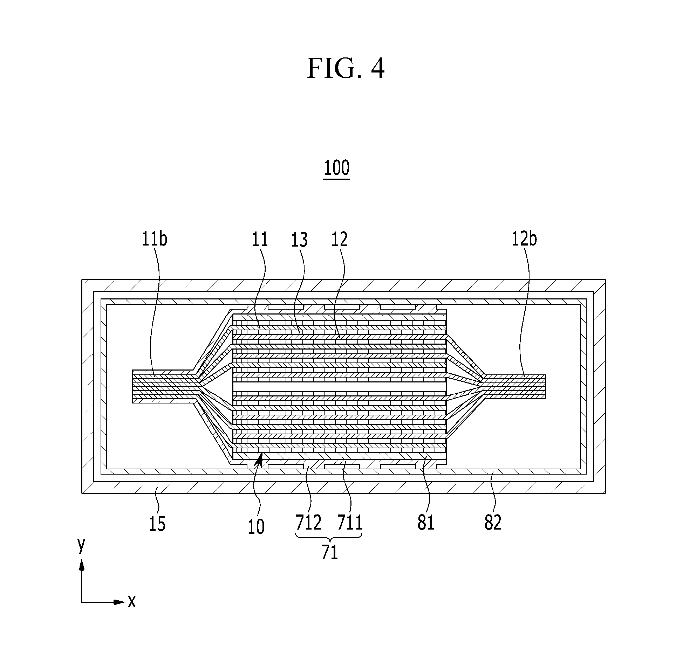

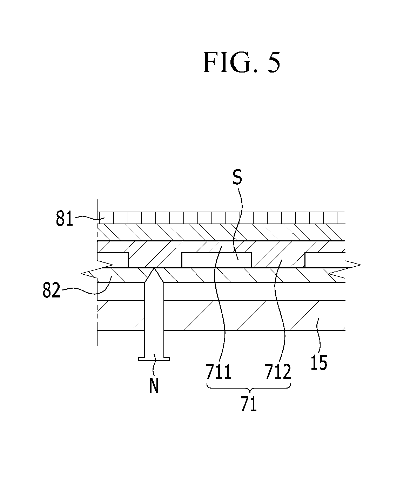

FIG. 3 shows an exploded perspective view illustrating an electrode assembly, a first insulation member, a safety device, and a second insulation member of FIG. 2. FIG. 4 shows a cross-sectional view illustrating the electrode assembly, the first insulation member, the safety device, and the second insulation member taken along line IV-IV of FIG. 2. FIG. 5 shows a partial cross-sectional view illustrating a state in which a conductor is short-circuited in the safety device of FIG. 4.

Referring to FIGS. 3 to 5, the rechargeable battery 100 of the first exemplary embodiment further includes a safety device 71 that is disposed between the electrode assembly 10 and the case 15. In one embodiment, the safety device 71 is installed in an insulation structure between the electrode assembly 10 and the case 15.

The safety device 71 is connected to an electrode of the electrode assembly 10 at the electrode terminal side in which the cap plate 20 is not connected. In the first exemplary embodiment, because the cap plate 20 is electrically connected to the positive terminal 22, the safety device 71 is connected to the negative electrode 11 of the electrode assembly 10 at the negative terminal 21 side.

The safety device 71 is disposed on at least one side of the two sides of the electrode assembly 10. In the first exemplary embodiment, the safety device 71 is disposed on both sides of the electrode assembly 10. For example, the safety device 71 includes a plate portion 711 and a protruded portion 712 that protrudes from at least one surface of the plate portion 711. In the first exemplary embodiment, the protruded portion 712 is formed at one surface of an outside of the plate portion 711. That is, the safety device 71 has portions that are formed in different thicknesses.

In one embodiment, the plate portion 711 has a set thickness and thus can maintain self-resistance of the safety device 71 to a current flowing in a plane direction. Because the protruded portion 712 is protruded from the plate portion 711, the protruded portion 712 increases penetration resistance to a current flowing in a thickness direction, while minimizing (or reducing) a decrease of self-resistance of the safety device 71.

In this exemplary embodiment, the safety devices 71 are provided at each of both surfaces of the electrode assembly 10. The safety device may be disposed at any one surface of the electrode assembly.

In this exemplary embodiment, a first insulation member 81 and a second insulation member 82 are disposed at both surfaces of the safety device 71. In this way, the first insulation member 81 may electrically insulate the safety device 71 and the electrode assembly 10 and the second insulation member 82 may electrically insulate the safety device 71 and the case 15.

In one embodiment, the plate portion 711 is in close contact with the first insulation member 81, and the protruded portion 712 is in close contact with the second insulation member 82. In this embodiment, the plate portion 711 has a planar form and supports the first insulation member 81 to the electrode assembly 10 in a stable structure. Further, the plate portion 711 has a separation space S from the second insulation member 82 according to a gap formed by the protruded portion 712.

For example, the protruded portion 712 is provided to have plural portions, and the plural portions are separated from each other in a first direction (X-axis direction of FIG. 3) on the safety device 71, and extended in a second direction (z-axis direction) intersecting (crossing) the first direction (x-axis direction). Further, in one embodiment, the protruded portion 712 is formed in a quadrilateral-shaped cross-section structure, for example, a square-shaped or rectangular-shaped cross-section structure.

In embodiments where the safety device 71 is interposed between the electrode assembly 10 and the case 15, before the electrode assembly 10 is short-circuited at the inside of the electrode assembly 10 by penetration of the conductor N, the safety device 71 is formed to cause a short circuit at the outside of the electrode assembly 10. For this purpose, in an embodiment, the case 15 is electrically connected to the positive electrode 12 of the electrode assembly 10, and the safety device 71 is electrically connected to the negative electrode 11 of the electrode assembly 10.

For example, the safety device 71 is bent along the uncoated region 11 b of the negative electrode 11 of the electrode assembly 10 to be connected to the uncoated region 11 b. In this example, a negative lead tab may be directly connected to an uncoated region or may be connected to a safety device to be connected to an uncoated region through the safety device.

When a conductor N penetrates, the conductor N may penetrate the case 15 and penetrate the electrode assembly 10. In this case, the safety device 71 that is disposed between the case 15 and the electrode assembly 10 causes a short circuit at the outside of the electrode assembly 10 before an internal short circuit of the electrode assembly 10.

For example, a voltage that is charged at the electrode assembly 10 is quickly discharged at the outside of the electrode assembly 10 through the case 15, the conductor N, and the safety device 71. In this example, while the protruded portion 712 directly contacts the conductor N, the protruded portion 712 has high penetration resistance to a current flowing in a thickness direction. Therefore, the protruded portion 712 is not melted and maintains an external short circuit, thereby allowing enough discharge of a current that is charged at the electrode assembly 10.

In order to further insulate the cap plate 20 and an upper portion of the safety device 71, the second insulation member 82 may have a structure that closes an upper portion. Therefore, the second insulation member 82 may have drawn-out openings 821 and 822 that draw out the negative and positive lead tabs 51 and 52 in an upper part.

Hereinafter, further exemplary embodiments of the present invention are described. Elements identical to, similar to, or corresponding to, those of the first exemplary embodiment and other exemplary embodiments are omitted.

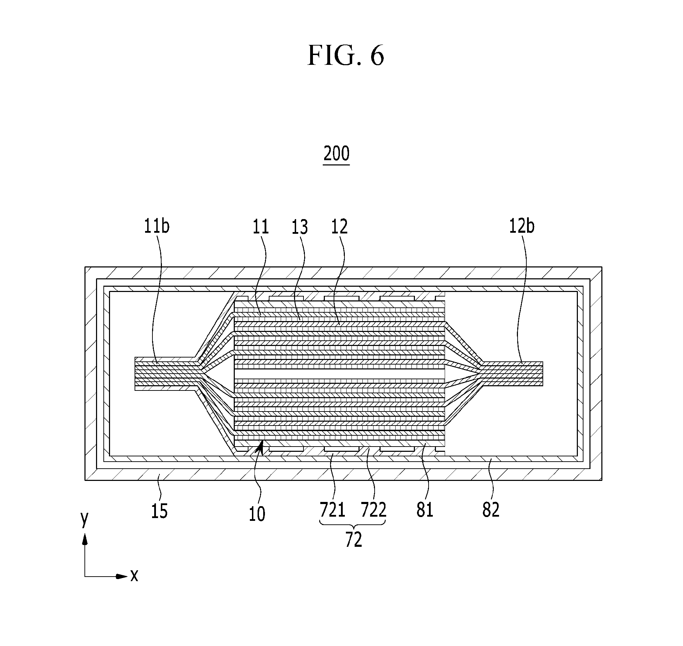

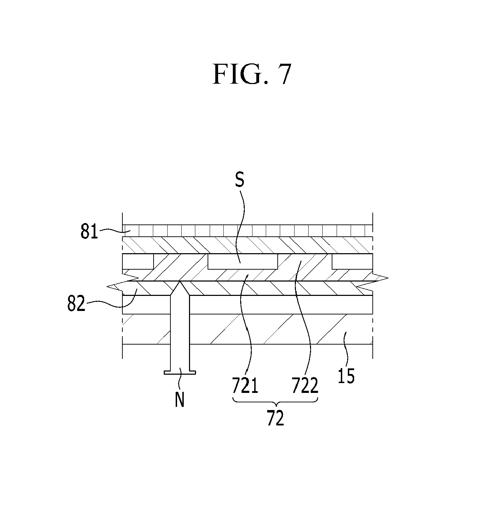

FIG. 6 shows a cross-sectional view illustrating a rechargeable battery 200 according to a second exemplary embodiment of the present invention, and FIG. 7 shows a partial cross-sectional view illustrating a state in which a conductor is short-circuited in the safety device of FIG. 6. Referring to FIGS. 6 and 7, a plate portion 721 of a safety device 72 is in close contact with a second insulation member 82, and a protruded portion 722 is in close contact with a first insulation member 81.

The plate portion 721 has a planar form and supports the second insulation member 82 to a case 15 in a stable structure. Further, in an embodiment, the plate portion 721 has separation space S from the first insulation member 81 according to a gap formed by the protruded portion 722.

When the conductor N penetrates, the plate portion 721 directly contacts a conductor N and has high penetration resistance to a current flowing in a thickness direction together with the protruded portion 722 of the opposite side. Therefore, the plate portion 721 is not melted and maintains an external short circuit, thereby allowing enough discharge of a current that is charged at the electrode assembly 10.

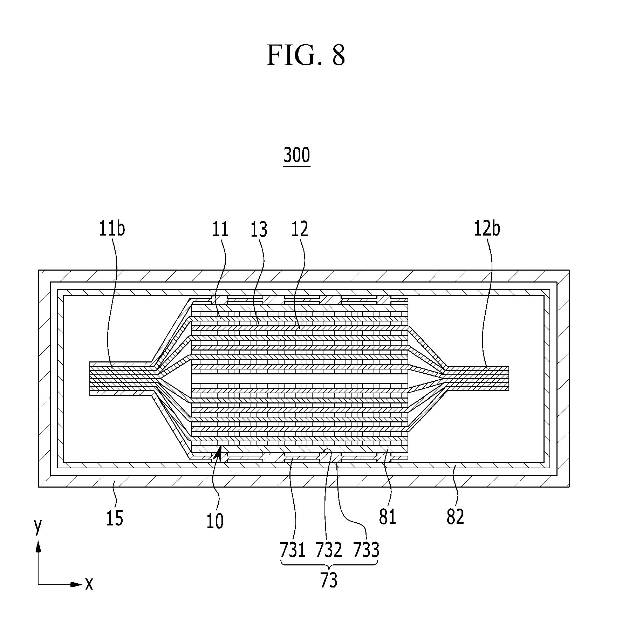

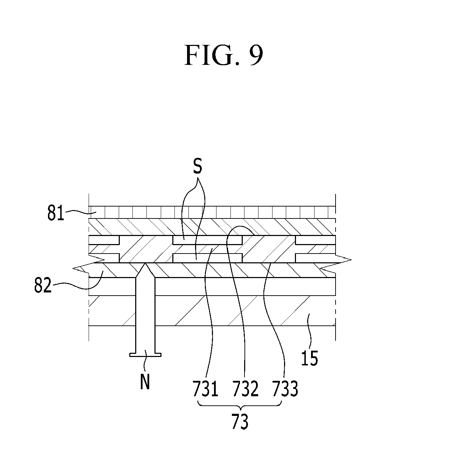

FIG. 8 shows a cross-sectional view illustrating a rechargeable battery 300 according to a third exemplary embodiment of the present invention. FIG. 9 shows a partial cross-sectional view illustrating a state in which a conductor is short-circuited in the safety device of FIG. 8. Referring to FIGS. 8 and 9, a safety device 73 includes a first protruded portion 732 on a first surface of the safety device and a second protruded portion 733 on a second surface of the safety device, opposite the first surface (i.e. having protruded portions at both surfaces of a plate portion 731). In this exemplary embodiment, the first protruded portion 732 and the second protruded portion 733 are disposed in a symmetrical structure at both surfaces of the plate portion 731.

The first protruded portion 732 is in close contact with a first insulation member 81, and the second protruded portion 733 is in close contact with a second insulation member 82. Further, the plate portion 731 has a separation space S from the first insulation member 81 according to a gap of the first protruded portion 732 and has separation space S from the second insulation member 82 according to a gap of the second protruded portion 733.

According to one embodiment, the first protruded portion and the second protruded portion are disposed at alternate positions on the first and second surfaces of a plate portion. In these embodiments, a separation space between the first insulation member and the plate portion according to a gap of the first protruded portion, and separation space between the second insulation member and the plate portion according to a gap of the second protruded portion, are disposed at alternate positions.

When the conductor N penetrates, the second protruded portion 733 directly contacts the conductor N and has a high penetration resistance to a current flowing in a thickness direction together with the first protruded portion 732 and the plate portion 731 of the opposite side. Therefore, the plate portion 731 is not melted and maintains an external short circuit state, thereby enabling enough discharge of a current that is charged at an electrode assembly 10.

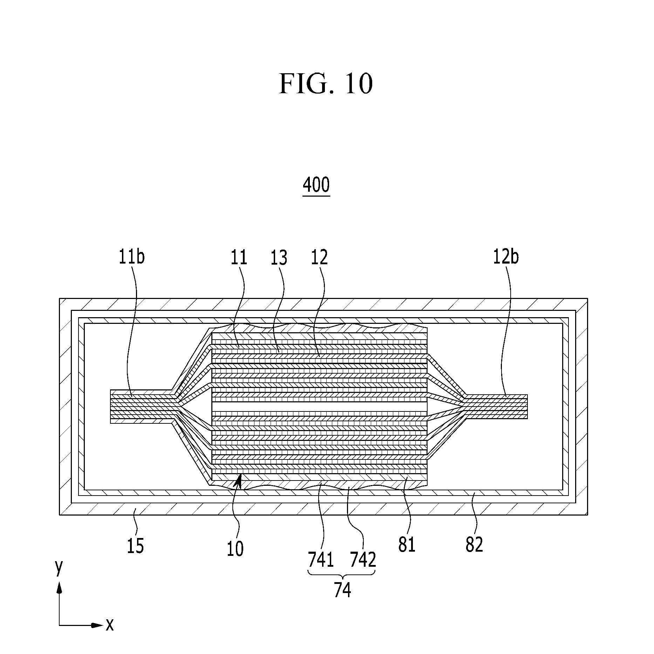

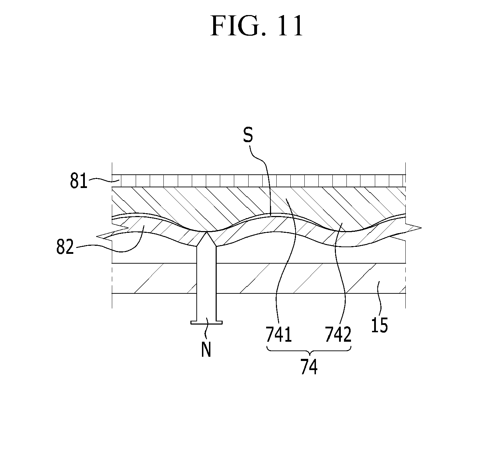

FIG. 10 shows a cross-sectional view illustrating a rechargeable battery 400 according to a fourth exemplary embodiment of the present invention. FIG. 11 shows a partial cross-sectional view illustrating a state in which a conductor is short-circuited in the safety device of FIG. 10. Referring to FIGS. 10 and 11, a safety device 74 includes a plate portion 741 and a protruded portion 742 that is protruded at one surface of the plate portion 741.

For example, the protruded portion 742 has a streamline cross-section structure. In this example, the plate portion 741 is in close contact with a first insulation member 81, and the protruded portion 742 is in close contact with a second insulation member 82. The plate portion 741 has a planar form and supports the first insulation member 81 to an electrode assembly 10 in a stable structure.

The streamline cross-section structure of the protruded portion 742 reduces or removes separation space S between the plate portion 741 and the second insulation member 82 in spite of a gap of the protruded portion 742, thereby securely forming an adhesion structure of the safety device 74 and the second insulation member 82.

When the conductor N penetrates, the protruded portion 742 directly contacts the conductor N and has high penetration resistance to a current flowing in a thickness direction together with the plate portion 741. Therefore, the plate portion 741 is not melted and maintains external short circuit state, thereby enabling enough discharge of a current that is charged at the electrode assembly 10.

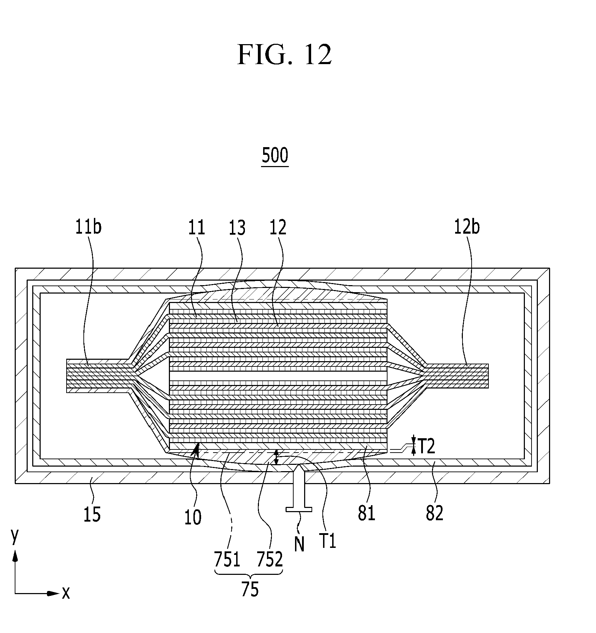

FIG. 12 shows a cross-sectional view illustrating a rechargeable battery 500 according a fifth exemplary embodiment of the present invention. Referring to FIG. 12, a safety device 75 includes a plate portion 751 and a protruded portion 752 that is protruded at one surface of the plate portion 751.

For example, the protruded portion 752 is extended in a first direction (X-axis direction of FIG. 12) on the safety device 75. In one embodiment, the protruded portion 752 forms a maximum thickness T1 that is set in a third direction (y-axis direction) intersecting the first direction at the center of the first direction and forms a minimum thickness T2 at both ends of the first direction.

The plate portion 751 is in close contact with the first insulation member 81, and the protruded portion 752 is in close contact with a second insulation member 82. The plate portion 751 has a planar form and supports the first insulation member 81 to the electrode assembly 10 in a stable structure.

A continuous streamline cross-section structure of the protruded portion 752 securely forms an adhesion structure of the safety device 75 and the second insulation member 82. Because the safety device 75 of the fifth exemplary embodiment widely forms a range of the protruded portion 752, compared to the first to fourth exemplary embodiments, the safety device 75 may have penetration of the conductor N over a wider range.

When the conductor N penetrates, the protruded portion 752 directly contacts the conductor N and has high penetration resistance to a current flowing in a thickness direction together with the plate portion 751. Therefore, the plate portion 751 is not melted and maintains an external short circuit state, thereby enabling enough discharge of a current that is charged at an electrode assembly 10.

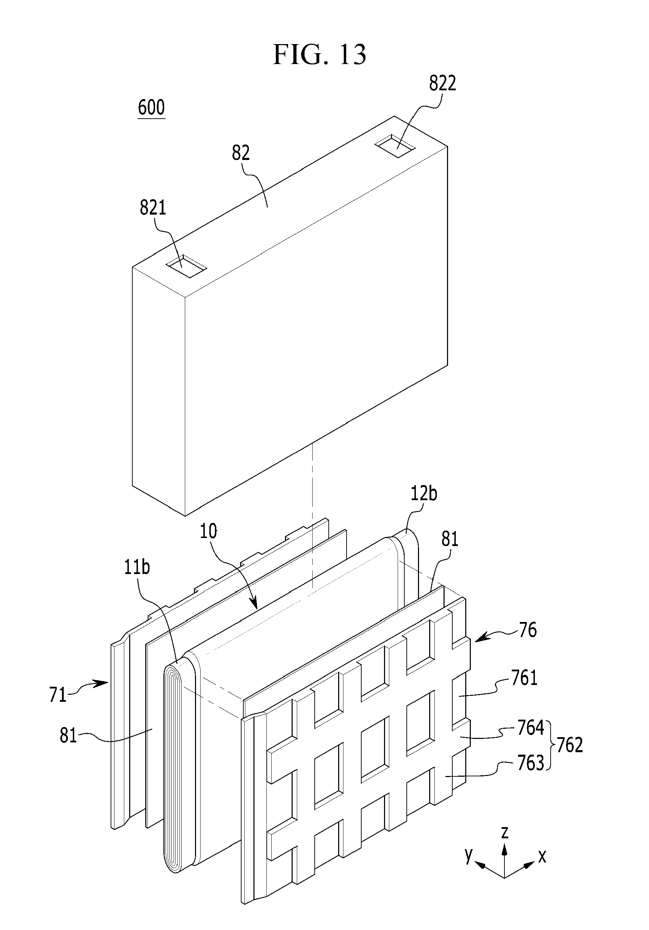

FIG. 13 shows an exploded perspective view illustrating an electrode assembly, a first insulation member, a safety device, and a second insulation member of a rechargeable battery 600 according to a sixth exemplary embodiment of the present invention. Referring to FIG. 13, a safety device 76 includes a plate portion 761 and a protruded portion 762 that is protruded at one surface of the plate portion 761.

For example, the protruded portion 762 may include a plurality of first protruded lines 763 and a plurality of second protruded lines 764 intersecting one surface of the plate portion 761. The first protruded lines 763 are separated from each other in a first direction (x-axis direction) on the safety device 76, and extended in a second direction (z-axis direction) intersecting the first direction. The second protruded lines 764 are separated from each other in a second direction (z-axis direction) and extended in the first direction (x-axis direction) to intersect (cross) the first protruded line 763.

The plate portion 761 is in close contact with the first insulation member 81, and the protruded portion 762 is in close contact with a second insulation member 82. The plate portion 761 has a planar form and supports the first insulation member 81 to the electrode assembly 10 in a stable structure.

Because the protruded portion 762 of the sixth exemplary embodiment is over a wider range, compared with the first to fourth exemplary embodiments, the protruded portion 762 corresponds to penetration of a conductor N over a wider range. Because the plate portion 761 of sixth exemplary embodiment is over a narrower range compared to the first to fourth exemplary embodiments, the protruded portion 761 corresponds to penetration of the conductor N over a narrower range.

When the conductor N penetrates, the first and second protruded lines 763 and 764 of the protruded portion 762 directly contact the conductor N and have high penetration resistance to a current flowing in a thickness direction together with the plate portion 761. Therefore, the first and second protruded lines 763 and 764 of the protruded portion 762 are not melted and maintain an external short circuit state, thereby enabling enough discharge of a current that is charged at the electrode assembly 10.

While this invention has been described in connection with certain exemplary embodiments, it is to be understood that the invention is not limited to the disclosed embodiments, but, on the contrary, is intended to cover various modifications and equivalent arrangements included within the scope of the appended claims, and equivalents thereof.

**<Description of symbols>**

| | | | |
|---|---|---|---|
| 10 : | electrode assembly | 11: | first electrode(negative electrode) |
| 11 a, 12a: | coated region | 11 b, 12b: | uncoated region |
| 12: | second electrode(positive electrode) | 13: | separator |
| 15: | case | 20: | cap plate |
| 21: | first electrode terminal (negative terminal) | | |
| 21 a, 22a: | rivet terminal | | |
| 21 b, 22b: | flange | 21 c, 22c: | plate terminal |
| 22: | second electrode terminal (positive terminal) | | |
| 24: | vent hole | | |
| 25: | vent plate | 25a: | notch |
| 27: | seal stopper | 29: | electrolyte injection opening |
| 31: | insulation member | 32: | top plate |
| 36, 37: | negative and positive gasket | | |
| 51, 52: | negative and positive lead tabs | | |
| 61, 62: | negative and positive insulation members | | |
| 71, 72, 73, 74, 75, 76: | safety device | | |
| 81, 82: | first and second insulation members | | |
| 100, 200, 300, 400, 500: | rechargeable battery | | |
| 711, 721, 731, 741, 751, 761: | plate portion | | |
| 712, 722, 742, 752, 762: | protruded portion | | |
| 732, 733: | first and second protrude portion | | |
| 763, 764: | first and second protruded line | | |
| 821, 822: | drawn-out opening | | |
| H1, H2: | terminal hole | N: | conductor |
| S: | separation space | | |
| T1, T2: | maximum thickness and minimum thickness | | |

## Claims

1. A rechargeable battery (100, 200, 300, 400, 500), comprising:
an electrode assembly (10) having a first electrode (11), a second electrode (12), and a separator (13) between the first electrode (11) and the second electrode (12);
a case (15) housing the electrode assembly (10);
a cap plate (20) coupled to an opening of the case (15) and electrically connected to the first electrode (11) or the second electrode (12);
a first electrode terminal (21) and second electrode terminal (22) in a terminal hole (H1, H2) of the cap plate (20), the first electrode terminal (21) and second electrode terminal (22) adapted to connect to the first electrode (11) and the second electrode (12), respectively; and
a safety device (71, 72, 73, 74, 75, 76) electrically connected to another one of the first electrode (11) or second electrode (12), the safety device being between the electrode assembly (10) and the case (15) and comprising:
a plate portion (711, 721, 731, 741, 751, 761); and
a protruded portion (712, 722, 732, 733, 742, 752, 762), protruding from at least one surface of the plate portion.

2. The rechargeable battery of claim 1, wherein the safety device (711, 721, 731, 741, 751, 761) is on at least one side of either side of the electrode assembly.

3. The rechargeable battery of claim 1 or 2, further comprising:
a first insulation member (81) between the electrode assembly (10) and the safety device (71, 72, 73, 74, 75, 76); and
a second insulation member (82) between the safety device (71, 72, 73, 74, 75, 76) and the case (15).

4. The rechargeable battery (100, 400, 500, 600) of claim 3, wherein the plate portion (711, 741, 751, 761) of the safety device (71, 74, 75, 76) is in close contact with the first insulation member (81), and the protruded portion (712, 742, 752, 762) of the safety device (71, 74, 75, 76) is in close contact with the second insulation member (82).

5. The rechargeable battery (100, 200, 300, 400, 600) of one of claims 1 to 3, wherein the protruded portion (712, 722, 732, 733, 742, 752, 762) of the safety device (71, 72, 73, 74, 76) is provided to have plural portions, and the plural portions are separated from each other in a first direction (x) on the safety device (71, 72, 73, 74, 76) and extended in a second direction (z) on the safety device (71, 72, 73, 74, 76), the second direction (z) crossing the first direction (x).

6. The rechargeable battery of claim 5, wherein the protruded portion (712, 722, 732, 733, 742, 752, 762) of the safety device (71, 72, 73, 74, 76) has a quadrilateral-shaped cross-section structure.

7. The rechargeable battery of claim 6, wherein the quadrilateral-shaped cross-section structure is square-shaped or rectangular-shaped.

8. The rechargeable battery (400) of claim 6 or 7, wherein the protruded portion (742) of the safety device (74) has a streamline cross-section structure.

9. The rechargeable battery (500) of one of claims 1 to 3, wherein the protruded portion (752) of the safety device (75) is extended in a first direction (x) on the safety device (75).

10. The rechargeable battery of claim 9, wherein the protruded portion (752) of the safety device (75) has a maximum thickness (T1) at the center of the first direction (x) and a minimum thickness (T2) at either end of the first direction (x).

11. The rechargeable battery (600) of one of claims 1 to 3, wherein the protruded portion (762) of the safety device (76) comprises:
a plurality of first protruded lines (763), separated from each other in a first direction (x) on the safety device (76) and extended in a second direction (z) on the safety device (76), intersecting the first direction (x); and
a plurality of second protruded lines (764), separated from each other in the second direction (z) on the safety device (76) and extended in the first direction (x) on the safety device (76), wherein the second protruded lines (764) cross the first protruded lines (763).

12. The rechargeable battery (200) of claim 3, wherein the plate portion (721) of the safety device (72) is in close contact with the second insulation member (82), and
the protruded portion (722) of the safety device (72) is in close contact with the first insulation member (81).

13. The rechargeable battery (300) of one of claims 1 to 3, wherein the protruded portion (732, 733) of the safety device (73) comprises a first protruded portion (732) on a first surface of the safety device (73), and a second protruded portion (733) on a second surface of the safety device (73), facing oppositely away from the first surface.

14. The rechargeable battery (300) of claim 13, further comprising a first insulation member between the electrode assembly and the safety device, and a second insulation member between the safety device and the case, wherein the plate portion (731) of the safety device (73) is separated between the first insulation member (81) and the second insulation member (82).

15. The rechargeable battery of claim 14, wherein the first protruded portion (732) is in close contact with the first insulation member (81), and the second protruded portion (733) is in close contact with the second insulation member (82).
